# EUROPEAN PATENT SPECIFICATION

(11) **EP 1 529 081 B1**
(45) Date of publication and mention of the grant of the patent: **22.10.2008**
(21) Application number: 03755312.0
(22) Date of filing: 30.04.2003
(51) Int. Cl.: C09B 67/22, F21V 15/06, F21V 15/01

(54) **LAMP WITH A BLACK OR ALMOST BLACK CASING MADE OF A POLYMER**
LAMPE MIT EINEM SCHWARZEN ODER FAST SCHWARZEN POLYMERGEHÄUSE
LAMPE A BOITIER NOIR, OU PRESQUE NOIR, FABRIQUE EN UN POLYMERE

(30) Priority: 27.05.2002 SI 200200135
(43) Date of publication of application: 11.05.2005
(73) Proprietor: Hella Saturnus Slovenija, Proizvodnja svetlobne opreme za motorna in druga vozila, d.o.o., 1000 Ljubljana (SI)
(72) Inventor: KRALJ, Ales, 1000 Ljubljana (SI); SMUC, Bostjan, 1251 Moravce (SI); ADAMLJE, Ales, 1296 Sentvid pri Sticni (SI); LENCEK, Lojze, 1236 Trzin (SI)
(74) Representative: Gros, Mladen
(86) International application number: PCT/SI2003/000014
(87) International publication number: WO 2003/099939

(56) References cited:
- EP-A- 0 193 631
- DD-A- 143 491
- FR-A- 2 687 761
- US-B1- 6 355 723
- PATENT ABSTRACTS OF JAPAN vol. 010, no. 036 (C-328), 13 February 1986 (1986-02-13) & JP 60 188450 A (ASAHI KASEI KOGYO KK), 25 September 1985 (1985-09-25)

## Description

The invention refers to a lamp with apparently black or almost black casing that is made of a polymer. More precisely, the invention refers to a lamp, whose polymer casing is black or almost black for the light from the visible spectral range. It is a small lamp with high luminosity, to be used *e.g*. in a vehicle.

A lamp is a device whereby a luminous flux from a bulb being a light source, for example, is either distributed when it is used for illumination or beamed in a headlamp. Besides the light source, the lamp also comprises a casing and an output optics surrounding the said light source. In the case discussed, the casing and the bezel are not translucent for the light from the visible spectral range. Namely, for the needs of the optical output system and also due to aesthetical reasons, the lamp is often provided with a bezel.

The human eye has a different sensitivity to the light of different wavelengths. The interval of wavelengths ranging from 380 nm to 700 nm is considered as the visual spectral range. The human eye, however, is at least slightly sensitive also to the light with a wavelength even up to 880 nm.

A usual bulb with a filament radiates more than 50 % of the luminous flux in the near (from 750 nm to 1,300 nm) and middle (from 1,300 nm to 3,000 nm) infrared spectral range.

A halogen bulb, however, radiates the major part of the luminous flux in the wavelength range from 700 nm to 1,100 nm and only 7 % in the wavelength range below 700 nm, i.e. in the visible spectral range.

The usefully exploited part of the whole luminous flux radiated by the light source leaves the lamp through its output optics. The remaining portion of the said whole luminous flux, however, partly traverses the lamp casing as a transmitted luminous flux, is partly absorbed in the casing wall and partly reflected from the inner surface of the casing. Especially the transmitted luminous flux in the visible spectral range is disturbing and not desired. Just on the contrary, however, a stronger transmitted luminous flux in the infrared range is even desired since it takes away the radiated infrared light that has not left through the output optics. Afterwards the heat from the absorbed luminous flux is dissipated either by infrared radiation from the hot lamp casing or by convection.

Optical properties of the lamp as determined by the application should not be spoilt by reflections of light in the visible spectral range taking place within the lamp casing. Therefore, the casing and the bezel should be black or almost black for the light from the visible spectral range. Thus, the light from the visual spectral range is neither transmitted nor reflected by the casing or the bezel of the lamp.

All light from the visible spectral range in the luminous flux that has impinged upon the casing or the bezel is absorbed in the black or almost black casing or bezel, while the light from the infrared spectral range in the luminous flux that has impinged upon the said casing or bezel can, generally speaking, also be absorbed only partially, since the casing or the bezel that is black or almost black for visible light is not necessarily black for the infrared light.

The luminous flux from the visible and also from the infrared spectral range absorbed in the casing and the bezel strongly heats the lamp, the more so the wider the wavelength interval of light, in which the casing and the bezel absorb all light.

The known casing and bezel of a modem lamp that are black or almost black, in order to achieve their black colour, are made of a polymer with added pigments on the basis of soot or metal oxides. And the said pigments absorb the luminous flux in the visible spectral range as well as in the whole infrared spectral range. Therefore, the temperature of a modem small headlamp exceeds 200°C.

In connection with what has just been said, there should be mentioned coloured polymer materials based on polymethylmetaacrylate or polycarbonate, absorbing all light in the visible spectral range and transmitting the light in the infrared spectral range. They are used, for example, for output windows, functioning as light filters, of various remote controls using infrared beams like in a television kit, video deck, record CD player or in a camera or video camera provided with an autofocus function (JP 60188450). Here methacryl resin is coloured by colorants Solvent Yellow 93, Solvent Red 135, Solvent Violet 31 and Solvent Blue 97 substantially inhibiting the transmission of visible light having a wave length up to 600 nm and not inhibiting the transmission of near infrared light. This, however, only represents a general state of the art since only experts in fields far away from the field of the illuminating engineering for vehicles are familiar with these materials. Namely, the materials mentioned are not used for lamp casings anywhere because they cannot withstand temperatures appearing in headlamps in spite of the self-cooling effect of these materials.

Technical solutions are known where special polymers are used for the casing and the bezel of the lamp in order to solve problems caused by the high temperature of the lamp.

Thus special rare polymers ("hi-end" polymers) are used to manufacture the lamp casing and bezel.

An engineer polymer, polyetherimide, that withstands a temperature exceeding 200°C, is already used for the manufacture of the headlamp casing and bezel. However, such high temperatures result in the evaporation of adhesive components in the joint between the casing and the output glass; the vapours of these components also condense on the optical surfaces of the lamp and make them blurry. Further, under the influence of high temperatures the polymer reflector, decorative bezel or polymer cover glass might become deformed although they are made of the material mentioned. Moreover, a deformation of the body, onto which the headlamp is fixed, might occur. Finally, the lamps with casings made of such material are expensive.

On the other hand, efforts to simplify the production of a metalized molded plastic lighting reflector, especially for automotive applications, by coating metal directly on the smooth pre-coated molded reflector surface are known (US 6,355,723). The defective molded articles have surface blemishes which are difficult to be detected on transparent resin articles and become noticeable only after a metal coating has been applied. The use of black thermoplastic resin compositions (only formulations 1 and 2 in Table 1 and 2), however, facilitates the visual identification of blemishes prior to metalization, thereby reducing vaste and expense. In said preferred formulations 1 and 2 polyetherimide is coloured with Solvent Red 135, Solvent Violet 13, Solvent Green 3, Solvent Yellow 93 and Amino Ketone Black, respectively. Of course, no enhancing the transmission of near infrared light is required or reported for these black resin articles since said enhancement would not have any effect at the metalized reflector. This technical solution is not directed to reduce the temperature of a lamp or to maintain it as low as possible when a light source placed within the lamp radiates the luminous flux.

Numerous technical solutions solving particular problems arising due to high lamp temperature are known as well. Only some of them are cited below.

In the patent GB 2079434 A a preferably metal light screen between the light source and the hot point on the output glass of the lamp is described. The said metal light screen spoils the appearance of the lamp. In the patent FR 268776 A1, however, as such light screen a filter is proposed, whereby the infrared light should be stopped. For this purpose, the filter has to be cooled.

In the patent GB 2025597 A the mounting of a metal plate above the bulb is proposed in order to prevent the appearance of the hot point on the casing, however, problems of corrosion of this plate as well as higher assembling costs arise. The patent DE 19 72 198 A1 proposes the installation of a metal plate, whose one end is fastened to the metal body of the vehicle. Such a body, however, is not always close to the lamp and the problem of sealing outlet of the plate from the casing appears. In the patent FR 2718826 A1 even a cooling of the lamp by windshield washing liquid is proposed, which is an extremely expensive solution and sensitive to hydraulic system defects, such as a pump defect, tube leakage and similar.

The problems described are also encountered at a bulb base embodiment as described in the patent EP 0 193 631 A1, the said embodiment being a solid metal body in contact with the metal part of the car body.

The above technical solutions solve problems of modem lamps in the first or the second presented way. These technical solutions represent a general state of the art in the field of the invention and are of no particular relevance for the technical solution as proposed by this invention.

Consequently, the technical problem of the invention to propose such a lamp with high luminosity, whose polymer casing is black or almost black only for the light from the visible spectral range and whose temperature should remain as low as possible also under the influence of the luminous flux radiated by a light source placed within the lamp.

The said technical problem is solved as recited in the claims.

The need for a solution of the described technical problem already existed for a long time. The evidence thereof are numerous efforts in various directions to solve the problem. In an unexpected manner, the presented teaching of the invention opens a basically new and important way of solving the known technical problem. It can be expected that the presented subject matter of the invention will be accepted in the market immediately and to an increasing degree.

The invention will be now disclosed in detail on the basis of the description of two variant embodiments.

Awareness of the eye spectral sensitivity curve on the one hand and of the radiation spectrum of the mentioned two kinds of bulbs on the other hand results in the idea that the strong heating of the lamp casing and bezel should be reduced by making the casing and bezel of a polymer material that absorbs all light in the visible spectral range up to a cut-off wavelength λ_{co}, lying in a border range between the visible and the near infrared spectral range, and that only partially absorbs, hence also transmits or reflects, the light in the near infrared and middle infrared spectral range from the mentioned cut-off wavelength λ_{co} on.

Here it should be considered that the human eye is at least slightly sensitive also to the light, having a wavelength even around 880 nm. Experiments have shown that a material with the cut-off wavelength of λ_{co} = 800 nm is suitable for a casing or bezel, i.e. a material that absorbs all light with λ < 800 nm and only partially absorbs the light with λ_{co} > 800 nm.

When, however, the lamp casing is enclosed in a cavity of a vehicle, as for example in a bumper, from which only the output optics of the lamp protrudes, a trickling of the reddish light through the casing is not visible and a material with λ_{co} = 700 nm can be used for the lamp casing.

Also the reflectance of the mentioned polymer material for the light in the near and middle infrared spectral range from the mentioned cut-off wavelength λ_{co} on contributes to the fact that at least a part of the bulb luminous flux in these spectral ranges directed to the casing or bezel is reflected thereby and that sooner or later a part of the reflected luminous flux leaves through the output optics of the lamp.

Any of the following polymers can be used, in accordance with the invention, as a translucent polymer for the manufacture of the casing or bezel:
- polycarbonate Lexan (General Electric) or Makrolon (Bayer)
- modified polycarbonate Makrolon 1260 - translucent (Bayer)
- polycarbonate co-polymer Apec 9354 or Apec 9339/5 (Bayer)
- polyamide 6 Durethan B (Bayer).

### Two embodiments of the first variant of the invention

The lamp of the invention uses a casing and a bezel, both made of a coloured polymer with the said cut-off wavelength being λ_{co} = 700 nm.

Any of the above-mentioned translucent polymers is coloured, in accordance with the invention, by means of
perinone with colour index C.I. 564120, solvent red 135, in a concentration from 0.05 mass % to 1 mass % and
antraquinone with colour index C.I. 61565, solvent green 3, in a concentration from 0.05 mass % to 1 mass %.

In a preferred embodiment of the first variant of the invention, the same colorants are used and the concentration of perinone ranges from 0.08 mass % to 0.25 mass % and the concentration of antraquinone ranges from 0.08 mass % to 0.25 mass %.

Thereby is achieved that in the infrared spectral range from 700 nm to 3,000 nm the casing absorbs less than 60 % and transmits at least 25 % of the incident luminous flux.

### Two embodiments of the second variant of the invention

The lamp of the invention uses a casing and a bezel, both made of a coloured polymer with the said cut-off wavelength being λ_{co} = 800 nm.

Any of the above-mentioned translucent polymers is coloured, in accordance with the invention, by means of
perinone with colour index C.I. 564120, solvent red 135, in a concentration from 0.05 mass % to 1 mass % and
phthalocyanine with colour index C.I. 74260, pigment green 7, in a concentration ranging from 0.05 mass % to 1 mass % and
antraquinone with colour index C.I. 615290, solvent blue 97, in a concentration from 0.05 mass % to 1 mass %.

In a preferred embodiment of the second variant of the invention, the same colorants are used and the concentration of perinone ranges from 0.1 mass % to 0.2 mass %, the concentration of phthalocyanine ranges from 0,1 mass % to 0,2 mass %, and the concentration of antraquinone ranges from 0.1 mass % to 0.15 mass %.

At the lower limits of the colorant concentration a sufficient absorption of visible light in the car headlamp casing is ensured by a thickness of the walls of the polymer cast part exceeding 3 mm. The upper limits of the colorant concentration are empirical limits where the absorption in the near infrared spectral range becomes too strong and starts to adversely influence the strength of the polymer.

In the headlamp according to the invention, which is provided with a casing and bezel made of a polymer coloured in a proposed manner, the temperature of the casing is lower by up to 70 K and the temperature at its other spots is lower by up to 40 K.

By the significant decrease in the temperature of the casing and bezel during the operation of the lamp according to the invention with respect to the temperatures of known lamps the use of a less expensive polymer is made possible. The manufacturing experience gained by tests shows that the lamp casing and bezel according to the invention should have an absorption in the near and middle infrared range lower than 60 %, and at the same time the casing transmittance at least 25 % is desirable.

The decrease in the casing temperature also results in a decreased evaporation of adhesive components as well as in a decreased subsequent condensation of the vapours of the adhesive on the optical surfaces of the lamp.

## Claims

1. Lamp with an apparently black or almost black casing that is made of a polymer, **characterized in**
- **that** the casing of the lamp is made of a translucent polymer
- and **that** the translucent polymer is coloured by such a colorant that all light in the visible spectral range up to a cut-off wave length λ_{co} in the border range between the visible and near infrared spectral range and only a part of the light in the near and middle infrared spectral range from the mentioned cut-off wave length λ_{co} upwards is absorbed by the coloured polymer.

2. Lamp as recited in claim 1, **characterized in that**
- perinone with colour index C.I. 564120, solvent red 135, in a concentration ranging from 0.05 mass % to 1 mass % and
- antraquinone with colour index C.I. 61565, solvent green 3, in a concentration ranging from 0.05 mass % to 1 mass %
are used as colorants in the preparation of the coloured polymer with the cut-off wavelength λ_{co} = 700 nm.

3. Lamp as recited in claim 2, **characterized in that**
- perinone with colour index C.I. 564120, solvent red 135, in a concentration ranging from 0.08 mass % to 0.25 mass % and
- antraquinone with colour index C.I. 61565, solvent green 3, in a concentration ranging from 0.08 mass % to 0.25 mass %
are used as colorants.

4. Lamp as recited in claim 1, **characterized in that**
- perinone with colour index C.I. 564120, solvent red 135 in a concentration ranging from 0.05 mass % to 1 mass % and
- phthalocyanine with colour index C.I. 74260, pigment green 7, in a concentration ranging from 0.05 mass %-to 1 mass % and
- antraquinone with colour index C.I. 615290, solvent blue 97, in a concentration ranging from 0.05 mass % to 1 mass %
are used as colorants in the preparation of the coloured polymer with the cut-off wavelength λ_{co} = 800 nm.

5. Lamp as recited in claim 4, **characterized in that**
- perinone with colour index C.I. 564120, solvent red 135 in a concentration ranging from 0.1 mass % to 0.25 mass % and
- phthalocyanine with colour index C.I. 74260, pigment green 7, in a concentration ranging from 0.1 mass % to 0.2 mass % and
- antraquinone with colour index C.I. 615290, solvent blue 97, in a concentration ranging from 0.1 mass % to 0.15 mass %
are used as colorants.

6. Lamp as recited in any of the previous claims, **characterized in that** a polycarbonate or a modified polycarbonate or a polycarbonate co-polymer or a polyamide 6 is used as the translucent polymer for the manufacture of the casing.

7. Lamp as recited in claim 6, **characterized in that** in the infrared spectral range from 700 nm to 3,000 nm the casing absorbs less than 60 % and transmits at least 25 % of the incident luminous flux.

8. Lamp as recited in claim 7, **characterized in that** the bezel of the lamp is also made of the coloured polymer.

## Patentansprüche

1. Lampe mit einem anscheinend schwarzen oder fast schwarzen aus einem Polymer hergestellten Gehäuse,
**dadurch gekennzeichnet,**
**dass** das Lampengehäuse aus einem durchscheinenden Polymer hergestellt ist und dass das durchscheinende Polymer mit einem solchen Farbmittel gefärbt ist, das alles Licht im sichtbaren Bereich des Spektrums hinauf bis zu einer im Grenzbereich zwischen dem sichtbaren Bereich und nahen Infrarotbereich des Spektrums liegenden Grenzwellenlänge λ_{co} und nur ein Teil des Lichtes im nahen und mittleren Infrarotbereich des Spektrums von der Grenzwellenlänge λ_{co} hinauf von dem gefärbten Polymer absorbiert wird.

2. Lampe nach Anspruch 1, **dadurch gekennzeichnet, dass**
Perinone mit Farbindex C.I. 564120, Solvent Red 135, in einer von 0,05 Gew.-% bis zur 1 Gew.-% reichenden Konzentration und
Antraquinone mit Farbindex C.I. 61565, Solvent Green 3, in einer von 0,05 Gew.-% bis zur 1 Gew.-% reichenden Konzentration
als Farbmittel bei der Aufbereitung des gefärbten Polymers mit der Grenzwellenlänge λ_{co} = 700 nm verwendet werden.

3. Lampe nach Anspruch 2, **dadurch gekennzeichnet, dass**
Perinone mit Farbindex C.I. 564120, Solvent Red 135, in einer von 0,08 Gew.-% bis zur 0,25 Gew.-% reichenden Konzentration und
Antraquinone mit Farbindex C.I. 61565, Solvent Green 3, in einer von 0,08 Gew.-% bis zur 0,25 Gew.-% reichenden Konzentration
als Farbmittel verwendet werden.

4. Lampe nach Anspruch 1, **dadurch gekennzeichnet, dass**
Perinone mit Farbindex C.I. 564120, Solvent Red 135, in einer von 0,05 Gew.-% bis zur 1 Gew.-% reichenden Konzentration und
Phthalocyanine mit Farbindex C.I. 74260, Pigment Green 7, in einer von 0,05 Gew.-% bis zur 1 Gew.-% reichenden Konzentration und
Antraquinone mit Farbindex C.I. 615290, Solvent Blue 97, in einer von 0,05 Gew.-% bis zur 1 Gew.-% reichenden Konzentration
als Farbmittel bei der Aufbereitung des gefärbten Polymers mit der Grenzwellenlänge λ_{co} = 800 nm verwendet werden.

5. Lampe nach Anspruch 4, **dadurch gekennzeichnet, dass**
Perinone mit Farbindex C.I. 564120, Solvent Red 135, in einer von 0,1 Gew.-% bis zur 0,25 Gew.-% reichenden Konzentration und
Phthalocyanine mit Farbindex C.I. 74260, Pigment Green 7, in einer von 0,1 Gew.-% bis zur 0,2 Gew.-% reichenden Konzentration und
Antraquinone mit Farbindex C.I. 615290, Solvent Blue 97, in einer von 0,1 Gew.-% bis zur 0,15 Gew.-% reichenden Konzentration
als Farbmittel verwendet werden.

6. Lampe nach einem der vorangehenden Ansprüche, **dadurch gekennzeichnet,**
**dass** ein Polykarbonat oder ein modifiziertes Polykarbonat oder ein Polykarbonatkopolymer oder ein Polyamid 6
als das durchscheinende Polymer zum Herstellen vom Gehäuse verwendet wird.

7. Lampe nach Anspruch 6, **dadurch gekennzeichnet, dass** im Infrarotbereich des Spektrums von 700 nm bis zu 3.000 nm das Gehäuse weniger als 60 % des eintrettenden Lichtstromes absorbiert und mindestens 25 % des eintrettenden Lichtstromes durchlässt.

8. Lampe nach Anspruch 7, **dadurch gekennzeichnet, dass** eine Blende der Lampe auch aus dem gefärbten Polymer hergestellt ist.

## Revendications

1. Lampe avec un boîtier visiblement noir ou pratiquement noir qui est constitué d'un polymère, **caractérisée**
- **en ce que** le boîtier de la lampe est constitué d'un polymère translucide
- et **en ce que** le polymère translucide est coloré par un colorant tel que la totalité de la lumière dans la plage spectrale visible jusqu'à une longueur d'onde d'exclusion λ_{co} dans l'intervalle limite entre la plage spectrale de la lumière visible et la plage spectrale du proche infrarouge et seulement une partie de la lumière dans la plage spectrale de l'infrarouge proche et intermédiaire de manière ascendante à partir de la longueur d'onde d'exclusion λ_{co} précitée sont absorbés par le polymère coloré.

2. Lampe suivant la revendication 1, **caractérisée en ce que**
- une périnone ayant un indice de couleur C.I. 564 120, Solvent Red 135, à une concentration comprise dans l'intervalle de 0,05 % en masse à 1 % en masse et
- une anthraquinone ayant un indice de couleur C.I. 61 565, Solvent Green 3, à une concentration comprise dans l'intervalle de 0,05 % en masse à 1 % en masse
sont utilisées comme colorants dans la préparation du polymère coloré à la longueur d'onde d'exclusion λ_{co} = 700 nm.

3. Lampe suivant la revendication 2, **caractérisée en ce que**
- une périnone ayant un indice de couleur C.I. 564 120, Solvent Red 135, à une concertration comprise dans l'intervalle de 0,08 % en nasse à 0,25 % en masse et
- une anthraquinone ayant un indice de couleur C.I. 61 565, Solvent Green 3, à une concentration comprise dans l'intervalle de 0,08 % en masse à 0,25 % en masse
sont utilisées comme colorants.

4. Lampe suivant la revendication 1, **caractérisée en ce que**
- une périnone ayant un indice de couleur C.I. 564 120, Solvent Red 135, à une concentration comprise dans l'intervalle de 0,05 % en masse à 1 % en masse et
- une phtalocyanine ayant un indice de couleur C.I. 74 260, Pigment Green 7, à une concentration comprise dans l'intervalle de 0,05 % en masse à 1 % en masse et une anthraquinone ayant un indice de couleur C.I. 615 290, Solvent Blue 97, à une concentration comprise dans l'intervalle de 0,05 % en masse à 1 % en masse
sont utilisées comme colorants dans la préparation du polymère coloré à la longueur d'onde d'exclusion λ_{co} = 800 nm.

5. Lampe suivant la revendication 4, **caractérisée en ce que**
- une périnone ayant un indice de couleur C.I. 564 120, Solvent Red 135, à une concentration comprise dans l'intervalle de 0,1 % en masse à 0,25 % en masse et
- une phtalocyanine ayant un indice de couleur C.I. 74 260, Pigment Green 7, à une concentration comprise dans l'intervalle de 0,1 % en masse à 0,2 % en masse et
- une anthraquinone ayant un indice de couleur C.I. 615 290, Solvent Blue 97, à une concentration comprise dans l'intervalle de 0,1 % en masse à 0,15 % en masse
sont utilisées comme colorants.

6. Lampe suivant l'une quelconque des revendications précédentes, **caractérisée en ce qu'**un polycarbonate ou un polycarbonate modifié ou un copolymère de polycarbonate ou bien un polyamide 6 est utilisé comme polymère translucide pour la production du boîtier.

7. Lampe suivant la revendication 6, **caractécisée en ce que,** dans la plage spectrale infrarouge de 700 nm à 3000 nm, le boîtier absorbe moins de 60 % et transmet au moins 25 % du flux lumineux incident.

8. Lampe suivant la revendication 7, **caractérisée en ce que** le boîtier à biseau de la lampe est également constitué du polymère coloré.
